# EUROPEAN PATENT SPECIFICATION

(11) **EP 2 848 827 B1**
(45) Date of publication and mention of the grant of the patent: **27.02.2019**
(21) Application number: 13787410.3
(22) Date of filing: 11.04.2013
(51) Int. Cl.: F16B 37/04, F16B 5/02, F16B 37/02

(54) **CLIP**
KLEMME
CLIP

(30) Priority: 11.05.2012 ES 201200516
(43) Date of publication of application: 18.03.2015
(73) Proprietor: Illinois Tool Works Inc., Glenview, IL 60025 (US)
(72) Inventor: TEJERO SALINERO, Isaac, 08750 Molins de Rei (Barcelona) (ES)
(74) Representative: Herrero & Asociados, S.L.
(86) International application number: PCT/ES2013/000089
(87) International publication number: WO 2013/167766

(56) References cited:
- DE-A1- 19 943 275
- DE-A1- 19 943 275
- US-A- 2 883 228
- US-A- 2 883 228
- US-A- 3 060 988
- US-A- 3 192 823
- US-A- 3 527 280
- US-A1- 2011 243 685
- US-A1- 2011 243 685

## Description

### FIELD OF THE INVENTION

The object of the present invention is a clip of the type that is inserted into the orifices of panels and supporting elements for providing a fastening element for receiving a screw, with the distinctive feature that said clip has been designed to advantageously perform the insertion of the clip into an orifice in a plane other than that corresponding to the insertion of the tightening screw.

### PRIOR ART

There are cases in which the spot on a panel on which it is required to mount a screwable fastening means is not suitable for the mounting of a clip on such surface. Consequently, a possible solution to this problem is mounting the clip on a side surface of the panel by providing a fastening point by means of a screw in the plane of said surface.

US 2,883,228 is a clip with insertion in a panel, enabling a hole for clamping a screw inserted in an orthogonal axis to the said clip insertion axis. Said hole is single threaded because the same space is shared with wings 40. Said wings have a clamping work combined with legs 36 positioned exterior to the panel hole. The legs 36 have a dihedral angle in relation to remain of the clip, being in section straight.

US 2011/0243685 A1 is a clip intended to be inserted into a panel orifice in an angular path in relation to the plane of panel, a 45? insertion angle. Said clip has a multithreaded cylinder and its fixation is produced thanks to a clamping screw that tights its arms 30 and 32 against the inner face of the panel, while exterior legs 28 to the panel do the snapping counterpart action. Said legs 28 are in section straight lines.

US 2,883,228 represents a weak fixation of an application because is single threaded. Simultaneously, the fixation against the panel is also weak. This construction is intended to fix appliances without having to resist important forces, for example to give adequate fastening points to support a decorative cover. Conversely, US 2011/0243685 A1 does not produce any fixation by itself, with independence of the appliance screw; it being constructively impossible to adapt it to produce an orthogonal combination axis between the insertion or fixation axis and the fixation of appliance or axis of insertion of the screw.

The main purpose of the present invention is to provide a clip that can satisfactorily solve this kind of issues, that is, an insertion clip for side surfaces, thereby providing a fastening means on a different surface of the panel.

Besides, as another one of the preferred objects of the present invention, said clip is intended to be rapidly and easily inserted without it being required the use of any tool whatsoever for the installation thereof.

Another one of the objects of the present invention is to also make the clip easily removable without a special tool being required.

These and other advantages of the present invention will become clear during the course of the description thereof,

### BRIEF EXPLANATION OF THE INVENTION

The present invention describes a clip in the general shape of a "C" having, as seen laterally, a cone-shaped appearance that facilitates insertion thereof in the orifice of a panel.

The clip has a base surface that is provided with both an orifice having a threaded cylinder with a domed entrance and at the end of said base a fold forming the other arm of the "C".

At the end of said clip arms, or of said base and of the other arm of the "C", are, on the one hand, at said base, an end portion in the approximate shape of a "U", and on the other hand, an end portion in the approximate shape of an "S". The functions and operation of said portions will be explained in detail below.

The outcome of this constructional arrangement is a clip that, when inserted in the orifice of a panel, provides a screwable fastening means in a plane other than that of the insertion plane of said clip. Actually, it is possible to vary the angle between said two planes, namely, the insertion plane and the tightening plane, by slightly changing the piece so that it becomes adapted to these different situations.

In this way two of the intended objects of the present invention are accomplished, since it is provided a clip that allows for said different plane between the insertion plane and the operation plane of the rear fastening of an application on the panel, thereby it being obtained, as will be later seen, a simple product that is easy to use, both as regards its installation and its removal,

### BRIEF EXPLANATION OF THE DRAWINGS

The invention will be understood more clearly with reference to the accompanying three sheets of drawings provided merely by way of a non-limiting example of the invention.

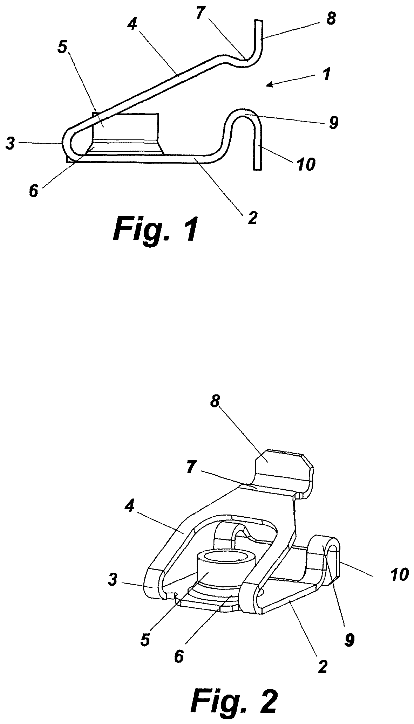

Figure 1 is an elevation view of a clip according to the preferred embodiment of the invention.
Figure 2 shows a perspective view of the clip of the previous figure.
Figures 3 to 5 show an example of the mounting of the clip according to the preferred embodiment shown in the preceding figures.
Figure 6 shows a view of the other possible embodiment of the clip of the invention, it being a front elevation view.
Figure 7 is a perspective view of the clip of the embodiment of the preceding figure.
Figure 8 shows a view of the clip according to the embodiment of figures 6 and 7, in its mounted condition onto the installation panel with a screw fastening an application thereto.

### DETAILED EXPLANATION OF THE INVENTION

The present invention consists of a clip, of the type inserted into the orifices of panels and supports for providing a fastening element for receiving a screw, in which the insertion orifice in the panel and the orifice corresponding to the thread of the fastening screw of an application are not aligned and are placed in planes with dihedral angles, orthogonal for instance.

The clip (1) is formed by a base (2) provided with a threaded orifice for receiving a fastening screw, In the preferred embodiment shown in the drawings accompanying the invention said threading is made by means of a cylindrical tube (5) having a domed entrance (6) in order to both facilitate fitting and positioning of the screw and provide some elastic capacity to the assembly against the tightening torque of the screw.

Said base (2) has at the end thereof a bend (3) from which emerge a couple of arms (4) that at the ends thereof meet together thereby forming a fold (7) having the approximate shape of an "S" ending in a surface (8) that externally abuts against the panel.

The clip has a general shape that is approximately conical as seen from said bend (3), this permitting an easy insertion into the mounting orifice of the panel and providing the suitable flexibility of the base (2) and the arms (4) for allowing said insertion.

The base (2) of the clip (1) has at its end opposed to the fold (3), an approximately U-shaped fold (9) ending in a surface (10) that externally abuts against the panel.

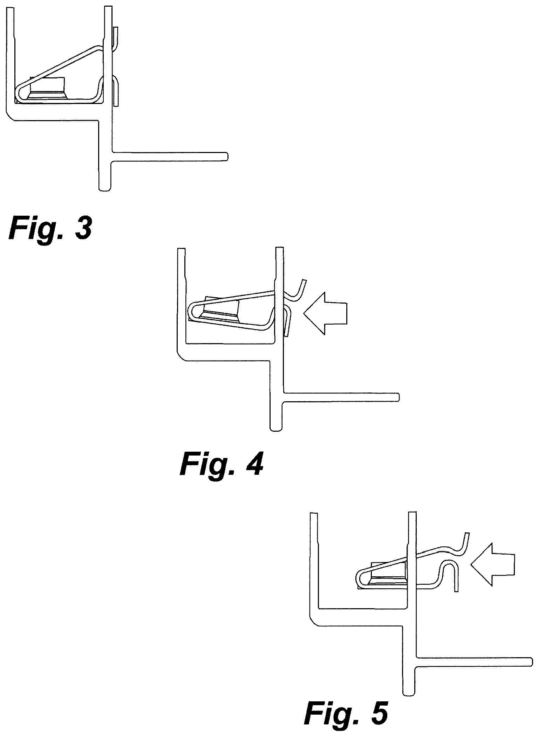

Operation of the clip (1), as regards mounting thereof, is quick and simple for an operator. As shown in figures 3 to 5, the aforesaid conical lateral shape permits a straightforward insertion into the mounting orifice of the panel. The edges of said orifice elastically compress, figure 5, the arms (4) against the base (2) of the clip (1) during insertion of the clip (1) in the orifice of the panel.

The "S" shape of the fold (7) is configured to upwardly push the portion of the material located within the hole of the panel during insertion of the clip (1) into said panel and permits the other "U"-shaped end of the clip (9) to reach its position. Surfaces (8 and 10) of the ends of the clip (1) are in the same plane and act against the external wall of the mounting panel,

In order to uninstall the clip (1) it is necessary to compress it, thereby bring the two external surfaces (8 and 10) closer to the panel, and to subsequently remove the clip in a process that is reverse to that of the insertion thereof. The clip (1) in accordance with the present invention is reusable because it does not become damaged during mounting or uninstalling thereof.

The clip cam be made of any suitable material such as by stamping of a metal band.

Figure 5 shows an example of use of the clip according to the present invention with a screw fitted into the threaded cylinder (5) that retains an application.

It is understandable that the invention is susceptible to being performed without significantly changing it by modifying, for instance, the angle of relation between the planes of insertion of the clip and the plane of insertion of the fastening screw of any given application. The figures show an orthogonal dihedral angle.

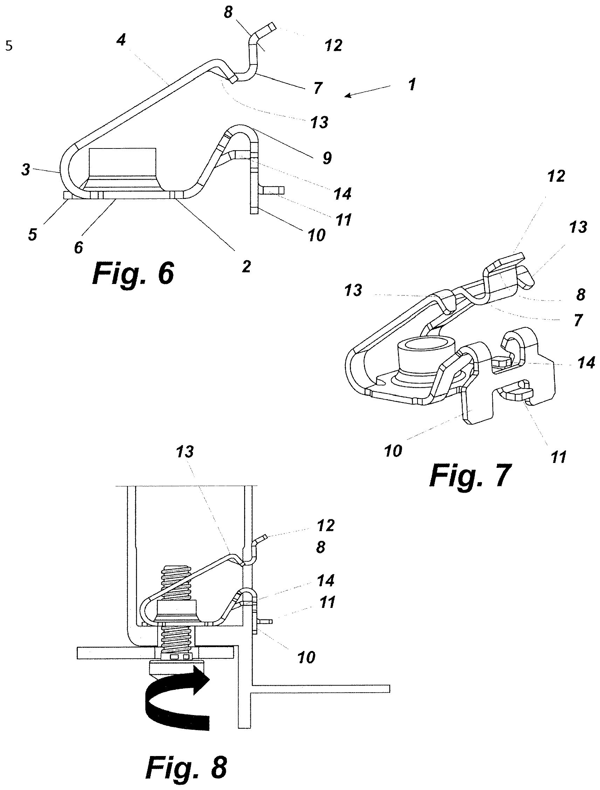

In another of the main embodiments of the present invention, as shown in figures 6 to 8, surfaces (8 and 10) respectively incorporate flanges (12 and 11) whose function is to facilitate the application of a tightening tool for extracting the clip from the mounting panel thereof.

Additionally, this clip is susceptible of featuring, as shown in said figures 6 to 8, folds (13) in said clip arms (4) that act as upper retaining abutments for preventing accidental exiting of the clip from the orifice during tightening of the mounting screw of an application.

The clip (1) can also be provided with a flange (14) emerging from said clip base (2) intended to rest on the mounting orifice of the clip and elastically work in combination with the aforesaid upper retaining abutments (13) .

Even though the preferred embodiment of the invention contemplates a threaded cylinder into which a screw is fitted, the present invention is susceptible of being performed with another type of threading. Instead of said threaded cylinder (5), provision is made, for instance, for the use of an orifice of the type that permits the utilization of a self-tapping screw. Another variation that is contemplated is the use of an external nut or a nut associated to the clip base (1) for the threading of a screw instead of said threaded cylinder (5).

It is understood that in the present case details with regard to finishing and form may be variable insofar as they do not modify the basic idea of the invention.

## Claims

1. CLIP, of the type that is inserted into the orifices of panels and supporting elements for providing a fastening element for receiving a screw, in which the orifice for insertion in the panel and the one corresponding to that of the thread of the fastening screw of an application are not aligned and are placed in planes with dihedral angles, **CHARACTERIZED in that** it comprises
a base (2) of said clip (1) whose end thereof that is opposed to a bend (3) has a fold (9) in the approximate shape of a "U";
a couple of arms (4), also located in the side of clip (1) opposed to said bend (3), that meet together at the end thereof to form a fold (7) in the approximate shape of an "S", it featuring an inclination suitably configured to permit the lifting of the inserted portion of said clip (1) at the moment of insertion into the panel orifice so as to facilitate the fitting of the other fold (9);
where the angle between the axis of insertion of an appliance fastening screw and the axis of insertion of said clip (1) into the panel is orthogonal.

2. CLIP, according to any of the preceding claims, **CHARACTERIZED in that** said clip (1) has an approximately conical general shape as seen from said bend (3).

3. CLIP, according to any of the preceding claims, **CHARACTERIZED in that** said fold (9) in the approximate shape of a "U" ends in a surface (10) for externally abutting against the panel.

4. CLIP, according to any of the preceding claims, **CHARACTERIZED in that** said fold (7) in the approximate shape of an "S" ends in a surface (8) that externally abuts against the panel.

5. CLIP, according to any of the preceding claims, **CHARACTERIZED in that** said surfaces (8 and 10) are placed in a same plane external to the insertion panel, said surfaces (8 and 10) respectively featuring flanges (12 and 11) configured to remove the clip from the mounting panel thereof.

6. CLIP, according to any of the preceding claims, **CHARACTERIZED in that** said arms (4) are provided at their ends with bends that act as upper retaining abutments (13) of the clip (1) into the panel orifice when tightening of the mounting screw in an application is ocurring.

7. CLIP, according to any of the preceding claims, **CHARACTERIZED in that** it is provided with a flange (14) that emerges from said base (2) of the clip (1).

8. CLIP, according to any of the preceding claims, **CHARACTERIZED in that** said clip can be made of any suitable material, such as for instance, through stamping of an elastic band.

9. CLIP, according to claim 1, **CHARACTERIZED in that** said clip (1) is formed by a base (2) that features a threaded orifice for receiving a fastening screw.

10. CLIP, according to the preceding claim, **CHARACTERIZED in that** said thread is made by means of a cylindrical tube (5) having a domed entrance (6).

11. CLIP, according to any of claims 1 to 8, **CHARACTERIZED in that** it is provided with an orifice configured to permit use of a self-tapping screw.

12. CLIP, according to any of claims 1 to 8, **CHARACTERIZED in that** it is provided with a nut for receiving a tightening screw.

## Patentansprüche

1. Klemme der Art, die in Öffnungen von Paneelen und Stützelementen eingefügt wird, um ein Befestigungselement zum Aufnehmen einer Schraube bereitzustellen, in dem die Öffnung zum Einfügen in dem Paneel und die eine entsprechend der des Gewindes der Befestigungsschraube einer Anwendung nicht ausgerichtet sind und in Ebenen mit Raumwinkeln platziert sind,
**dadurch gekennzeichnet, dass**
sie umfasst
eine Basis (2) der Klemme (1), deren Ende, das einer Krümmung (3) gegenüberliegt, eine Faltung (9) in annähernd der Form eines "U" aufweist;
einigen Armen (4), die ebenfalls an der Seite der Klemme (1) gegenüber der Krümmung (3) angeordnet sind, die sich an deren Ende treffen, um eine Faltung (7) in annähernd der Form eines "S" auszubilden, die eine Neigung aufweist, die geeignet konfiguriert ist, um das Anheben des eingefügten Abschnitts der Klemme (1) in dem Moment der Einfügung in die Paneelöffnung zu gestatten, um das Einpassen der anderen Faltung (9) zu erleichtern;
wobei der Winkel zwischen der Einfügeachse einer Anwendungsbefestigungsschraube und der Einfügeachse der Klemme (1) in das Paneel rechtwinklig ist.

2. Klemme nach einem der vorangehenden Ansprüche,
**dadurch gekennzeichnet, dass** die Klemme (1) vor der Krümmung (3) aus betrachtet eine allgemein konische Form aufweist.

3. Klemme nach einem der vorangehenden Ansprüche,
**dadurch gekennzeichnet, dass** die Faltung (9) in annähernd der Form eines "U" in einer Oberfläche (10) endet, um extern gegen das Paneel in Anlage zu geraten.

4. Klemme nach einem der vorangehenden Ansprüche,
**dadurch gekennzeichnet, dass** die Faltung (7) in der annähernden Form eines "S" in einer Oberfläche (8) endet, die extern gegen das Paneel in Anlage ist.

5. Klemme nach einem der vorangehenden Ansprüche,
**dadurch gekennzeichnet, dass** die Oberflächen (8 und 10) in einer gleichen externen Ebene zu dem Einfügepaneel platziert sind, die Oberflächen (8 und 10) entsprechend Flansche (12 und 11) aufweisen, die konfiguriert sind, die Klemme von dem Montagepaneel zu entfernen.

6. Klemme nach einem der vorangehenden Ansprüche,
**dadurch gekennzeichnet, dass** die Arme (4) an ihren Enden mit Krümmungen bereitgestellt sind, die als obere Halteanlagen (13) der Klemme (1) in die Paneelöffnung bereitgestellt sind, wenn ein Befestigen der Montageschraube in einer Anwendung auftritt.

7. Klemme nach einem der vorangehenden Ansprüche,
**dadurch gekennzeichnet, dass** sie mit einem Flansch (14) bereitgestellt ist, der von der Basis (2) der Klemme (1) austritt.

8. Klemme nach einem der vorangehenden Ansprüche,
**dadurch gekennzeichnet, dass** die Klemme aus einem geeigneten Material hergestellt sein kann, wie zum Beispiel durch Stanzen aus einem elastischen Band.

9. Klemme nach Anspruch 1,
**dadurch gekennzeichnet, dass** die Klemme (1) durch eine Basis (2) ausgebildet ist, die eine mit Gewinde versehene Öffnung zum Aufnehmen einer Befestigungsschraube aufweist.

10. Klemme nach den vorangehenden Ansprüchen,
**dadurch gekennzeichnet, dass** das Gewinde mittels eines zylindrischen Rohrs (5) ausgebildet ist, das einen kuppelförmigen Eingang (6) hat.

11. Klemme nach einem der Ansprüche 1 bis 8,
**dadurch gekennzeichnet, dass** sie mit einer Öffnung bereitgestellt ist, die konfiguriert ist, die Verwendung einer selbstschneidenden Schraube zu gestatten.

12. Klemme nach einem der Ansprüche 1 bis 8,
**dadurch gekennzeichnet, dass** sie mit einer Mutter zum Empfangen einer Befestigungsschraube bereitgestellt ist.

## Revendications

1. CLIP, du type qui est inséré dans l'orifice de panneaux et supportant des éléments pour fournir un élément de fixation destiné à recevoir une vis, dans lequel l'orifice pour insertion dans le panneau et le un correspondant à celui du filet de la vis de fixation d'une application, ne sont pas alignés et sont placés dans des plans ayant des angles dièdres, **CARACTÉRISÉ en ce qu'**il comprend
une base (2) dudit clip (1) dont l'extrémité qui est opposée à une courbure (3) présente un pli (9) sous la forme approximative d'un « U » ;
deux bras (4), également placés sur le côté du clip (1), opposés à ladite courbure (3), qui se rencontrent à son extrémité pour former un pli (7) sous la forme approximative d'un « S », présentant une inclinaison configurée de manière appropriée pour permettre le levage de la partie insérée dudit clip (1) au moment de l'insertion dans l'orifice du panneau, de manière à faciliter la fixation de l'autre pli (9) ;
dans lequel l'angle entre l'axe d'insertion d'une vis de fixation de dispositif et l'axe d'insertion dudit clip (1) dans le panneau est orthogonal.

2. CLIP, selon la revendication précédente, **CARACTÉRISÉ en ce que** ledit clip (1) a une forme générale approximativement conique, vue de ladite courbure (3).

3. CLIP, selon l'une quelconque des revendications précédentes, **CARACTÉRISÉ en ce que** ledit pli (9) sous la forme approximative d'un « U » se termine sur une surface (10) pour buter à l'extérieur contre le panneau.

4. CLIP, selon l'une quelconque des revendications précédentes, **CARACTÉRISÉ en ce que** ledit pli (7) sous la forme approximative d'un « S » se termine sur une surface (8) qui bute à l'extérieur contre le panneau.

5. CLIP, selon l'une quelconque des revendications précédentes, **CARACTÉRISÉ en ce que** lesdites surfaces (8 et 10) sont placées dans un même plan externe au panneau d'insertion, lesdites surfaces (8 et 10) comportant respectivement des brides (12 et 11) configurées pour retirer le clip du panneau de montage

6. CLIP, selon l'une quelconque des revendications précédentes, **CARACTÉRISÉ en ce que** lesdits bras (4) sont munis à leurs extrémités de courbures qui agissent comme des butées de retenue supérieures (13) du clip (1) dans l'orifice du panneau lors du serrage de la vis de montage dans une application

7. CLIP, selon l'une quelconque des revendications précédentes, **CARACTÉRISÉ en ce qu'**il est muni d'une bride (14) qui sort de ladite base (2) du clip (1) .

8. CLIP, selon l'une quelconque des revendications précédentes, **CARACTÉRISÉ en ce que** ledit clip peut être en un matériau quelconque, tel que, par exemple, par estampage d'un ruban élastique.

9. CLIP, selon la revendication 1 **caractérisé en ce que** ledit clip (1) est constitué d'une base (2) qui comporte un orifice fileté pour recevoir une vis de fixation.

10. CLIP, selon la revendication précédente, **caractérisé en ce que** ledit filet est réalisé au moyen d'un tube cylindrique (5) ayant une entrée bombée (6).

11. CLIP, selon l'une quelconque des revendications 1 à 8, **caractérisé en ce qu'**il est muni d'un orifice configuré pour permettre l'utilisation d'une vis auto-taraudeuse.

12. CLIP, selon l'une quelconque des revendications 1 à 8, **caractérisé en ce qu'**il est muni d'un écrou pour recevoir une vis de serrage.
